(19) Europäisches Patentamt
European Patent Office
Office européen des brevets

(11) **EP 2 466 900 A2**

(12) **EUROPEAN PATENT APPLICATION**

(43) Date of publication:
**20.06.2012 Bulletin 2012/25**

(51) Int Cl.:
***H04N 13/00*** *(2006.01)*

(21) Application number: **11177397.4**

(22) Date of filing: **12.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.12.2010 JP 2010283505**

(71) Applicant: **Kabushiki Kaisha Toshiba Tokyo (JP)**

(72) Inventor: **Yamada, Masahiro Tokyo (JP)**

(74) Representative: **HOFFMANN EITLE Patent- und Rechtsanwälte Arabellastraße 4 81925 München (DE)**

(54) **Image processing device, image processing method and image display apparatus**

(57) According to one embodiment, an image processing device includes a first multiple parallax image generator and a second multiple parallax image generator. The first multiple parallax image generator is configured to generate a plurality of parallax images of an image signal seen from viewpoints different from each other based on one parallax image generating parameter or a plurality of parallax image generating parameters. The a second multiple parallax image generator is configured to generate a plurality of parallax images of an OSD (On Screen Display) superimposed on the image signal seen from viewpoints different from each other based on the parallax image generating parameter or the plurality of parallax image generating parameters. The parallax image generating parameter or at least one of the plurality of parallax image generating parameters set to the first multiple parallax image generator is independent of the parallax image generating parameter or at least one of the plurality of parallax image generating parameters set to the second multiple parallax image generator.

FIG. 1

EP 2 466 900 A2

**Description**

FIELD

Embodiments described herein relate generally to an image processing device, an image processing method and an image display apparatus.

BACKGROUND

Recently, there has been proposed a parallax image converter which receives and decodes a transmitted and encoded two-dimensional image signal to convert it to multiple parallax images.

Furthermore, an OSD (On Screen Display), which is a kind of menu setting display and so on, is superimposed on a two-dimensional image not having depth information.

However, it is not enough discussed that how to display the OSD with regard to a display such as autostereoscopic display which needs depth information on displaying a two-dimensional image signal.

BRIEF DESCRIPTION OF THE DRAWINGS

Fig. 1 is a schematic block diagram showing an image display apparatus according to one embodiment.

Fig. 2 is a diagram where the OSD is superimposed on the two-dimensional video signal.

Fig. 3 is a diagram for explaining a manner where the depth information is generated from the two-dimensional image of Fig. 2.

Fig. 4 is a schematic block diagram showing an example of an internal configuration of the first multiple parallax image generator 7.

Fig. 5 is a graph showing an example of the relationship between the input and output of the dynamic range controller 12.

Fig. 6 is a diagram describing a viewing distance setting parameter d1 and a depth setting parameter d2.

Figs. 7A and 7B are parallax images for left eye and for right eye, respectively.

Fig. 8 is a diagram for explaining the blend information of the OSD.

Figs. 9A and 9B are parallax images for left eye and right eye respectively obtained using the blend information of Fig. 8.

Fig. 10 is a diagram for explaining the blend information of the OSD according to one embodiment.

Figs. 11A and 11B are diagrams for explaining the blend information of the OSD for left eye and for right eye respectively according to one embodiment.

Figs. 12A and 12B are parallax images for left eye and for right eye obtained by using the blend information explained on Fig. 11.

Fig. 13 is a schematic block diagram showing an example of an internal configuration of the transmission system 40.

Fig. 14 is a first example showing a transmission manner of the image data and the OSD data.

Fig. 15 is a second example showing a transmission manner of the image data and the OSD data.

Fig. 16 is a third example showing a transmission manner of the image data and the OSD data.

DETAILED DESCRIPTION

In general, according to one embodiment, an image processing device includes a first multiple parallax image generator and a second multiple parallax image generator. The first multiple parallax image generator is configured to generate a plurality of parallax images of an image signal seen from viewpoints different from each other based on one parallax image generating parameter or a plurality of parallax image generating parameters. The a second multiple parallax image generator is configured to generate a plurality of parallax images of an OSD (On Screen Display) superimposed on the image signal seen from viewpoints different from each other based on the parallax image generating parameter or the plurality of parallax image generating parameters. The parallax image generating parameter or at least one of the plurality of parallax image generating parameters set to the first multiple parallax image generator is independent of the parallax image generating parameter or at least one of the plurality of parallax image generating parameters set to the second multiple parallax image generator.

Embodiments will now be explained with reference to the accompanying drawings.

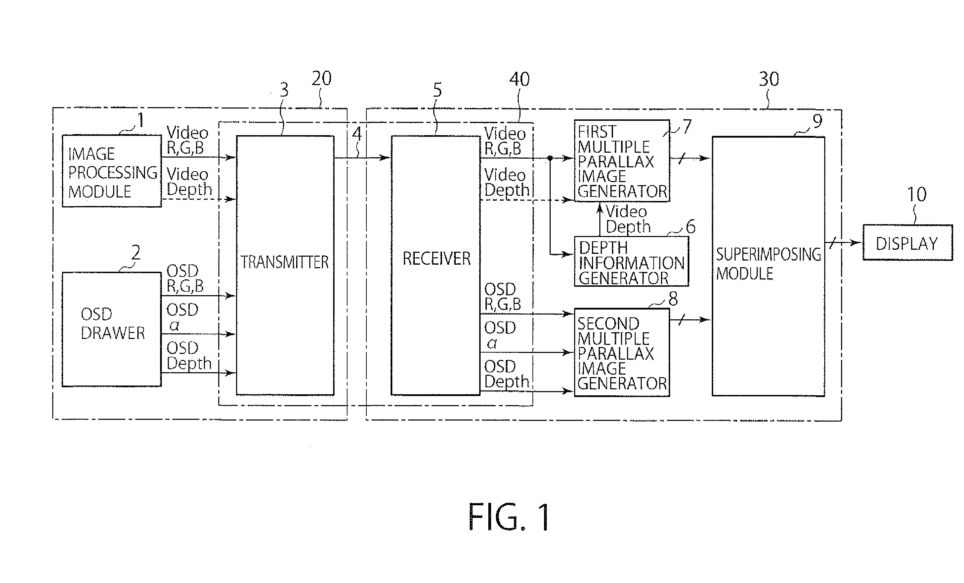

Fig. 1 is a schematic block diagram showing an image display apparatus according to one embodiment. The image display apparatus of Fig. 1 has an image signal processing module 1, an OSD drawer 2, a transmitter 3, a transmission path 4, a receiver 5, a depth information generator 6, a first multiple parallax image generator 7, a second multiple parallax image generator 8, a superimposing module 9 and a display 10.

The image signal processing module 1, the OSD drawer 2 and the transmitter 3 are integrated in a first chip 20 such as an SoC (System on Chip), while the receiver 5, the depth information generator 6, the first multiple parallax image generator 7, the second multiple parallax image generator 8 and the superimposing module 9 are integrated in a second chip 30. For example, the first chip 20 is mounted on a video outputting module of a tuner or a personal computer, and the second chip 30 is mounted on a side of the display 10. The transmitter 3, the transmission path 4 and the receiver 5 form a transmission system 40.

An encoded two-dimensional video signal is inputted to the image signal processing module 1 through a broadcast or network, for example. The image signal processing module 1 decodes the encoded two-dimensional video signal to generate a decoded two-dimensional video signal. The two-dimensional video signal includes brightness values R, G and B (Video R, G, B) of each pixel, for example.

Furthermore, encoded multiple parallax image signals can be inputted to the image signal processing module 1. In this case, the image signal processing module 1 decodes the encoded multiple parallax image signals to generate decoded multiple parallax image signals. The multiple parallax images include brightness values R, G and B (Video R, G, B) and depth information (Video Depth) of each pixel, for example.

Hereinafter, the brightness values R, G and B and the depth information of the video signal will be referred to as video signal information as a whole. The two-dimensional video signal or the multiple parallax image signals generated by the image signal processing module 1 is transmitted to the first multiple parallax image generator 7 through the transmission system 40 mentioned below.

The OSD drawer 2 draws or sets an OSD which is, for example, a channel number or a menu setting screen. The OSD includes a graphic image in addition to the menu setting image and so on. The OSD includes brightness values R, G and B (OSD R, G, B) of each pixel. In the present embodiment, the OSD area is displayed so that the OSD area is seen near-side from the display 10 in order to highlight the OSD area when the OSD is displayed on the display 10. Therefore, the OSD includes depth information (OSD depth) of each pixel. The depth information included in the OSD can be configured to be modified or changed by a user's operation on the menu screen. By such a configuration, the user can arbitrarily control how the OSD is seen when the OSD is displayed.

The OSD further includes blend information $\alpha$ (OSD $\alpha$) of each pixel. The blend information $\alpha$ is used for, what is called, alpha-blend and indicates a ratio for blending the OSD with the background. When the blend information $\alpha$ is expressed by "n" bit, the blend information $\alpha$ can be an integer of $0 \leq \alpha \leq 2^{n-1}$. Note that, the depth information can be inputted when the SOD is drawn or set, or generated by the OSD drawer 2 using a software.

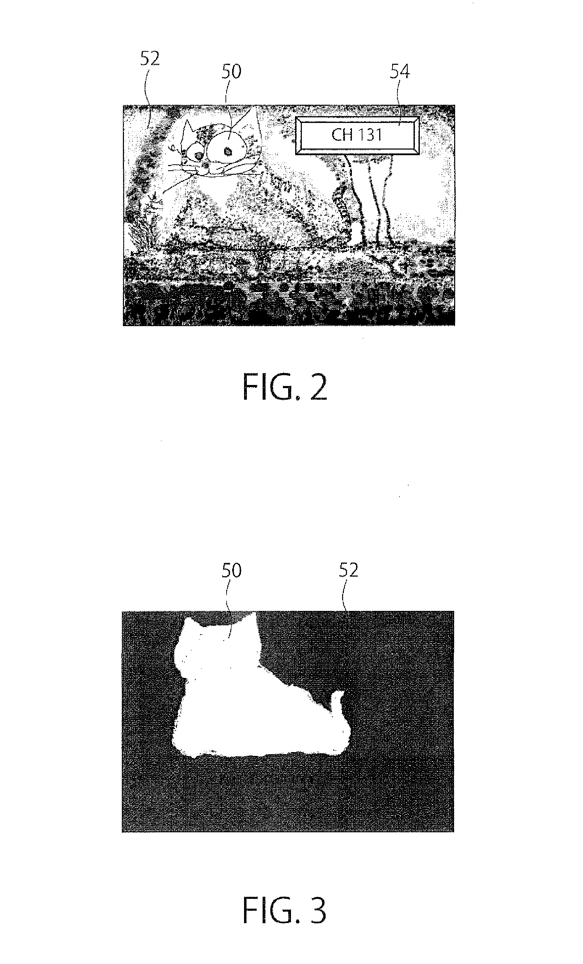

By superimposing the OSD simply on the decoded video signal to display it on the display 10, Fig. 2 can be obtained, for example. In Fig. 2, "CH 131" attached the reference numeral 54 shows the OSD. This OSD 54 indicates a channel number in Fig. 2.

Hereinafter, the brightness values R, G and B, the blend information $\alpha$ and the depth information of the OSD will be referred to as OSD information. The OSD information drawn or set by the OSD drawer 2 is transmitted to the second multiple parallax image generator 8 through the transmission system 40.

The transmission system 40 having the transmitter 3, the transmission path 4 and the receiver 5 transmits the video signal received by the image signal processing module 1 to the first multiple parallax image generator 7, and transmits the OSD drawn or set by the OSD drawer 2 to the second multiple parallax image generator 8. An example of the transmission system 40 will be explained below.

The depth information generator 6 analyses the decoded two-dimensional video signal or multiple parallax image signals to generate the depth information of the image and transmits it to the first multiple parallax image generator 7.

For example, the depth information generator 6 generates the depth information of an object (for example, a cat) 50 from the two-dimensional image shown in Fig. 2. The depth information generator 6 generates the depth information based on a known manner. For example, a background area 52 is separated from the object 50 in the other area, and a representative motion vector of the background area 52 is calculated based on a motion vector of the two-dimensional image and that of the background area 52. Next, a relative motion vector is calculated by subtracting the representative motion vector from the motion vector of the two-dimensional image. Then, using the relative motion vector, the depth information of the object 50 in the two-dimensional image is generated as shown in Fig. 3. Note that, the depth information of an object nearer from the display 10 (for example, the object 50 of Fig. 2) is set larger than that of an object farther from the display 10 (for example, the background area 52 of Fig. 2).

When the video signal generated by the image signal processing module 1 includes the depth information, it is enough to transmit the depth information to the first multiple parallax image generator 7 directly and the above processing of the depth information generator 6 is unnecessary.

The first multiple parallax image generator 7 generates multiple parallax images using the depth information generated by the depth information generator 6 or that transmitted from the image signal processing module 1. For example, when the image processing device of the present embodiment is used for stereoscopic display with glasses, two parallax images are generated, while when the image processing device of the present embodiment is used for autostereoscopic display, for example first to ninth parallax images seen from nine direction including a central viewpoint.

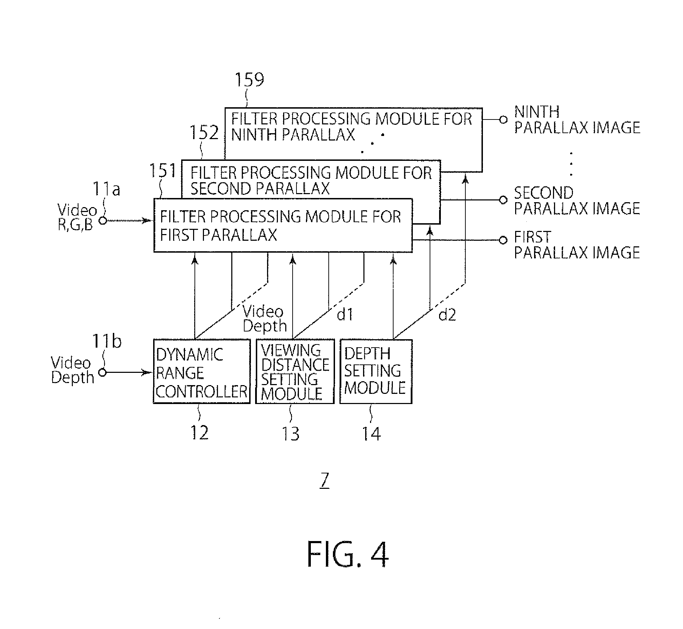

Fig. 4 is a schematic block diagram showing an example of an internal configuration of the first multiple parallax image generator 7. The first multiple parallax image generator 7 has a dynamic range controller 12, a viewing distance setting module 13, a depth setting module 14, and filter processing module 151 to 159 for first to ninth parallax. It is considered that the first multiple parallax image generator 7 of Fig. 4 generates the first to the ninth parallax images for autostereoscopic display.

The brightness values R, G and B of the video signal and the depth information of the video signal are inputted to the input terminals 11a and 11b, respectively.

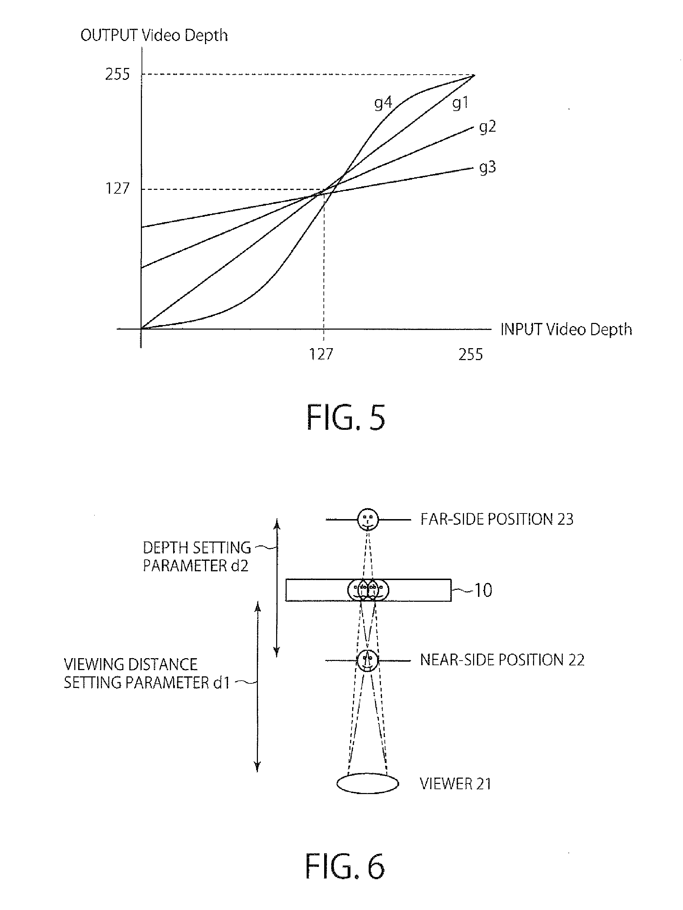

The dynamic range controller 12 controls a dynamic range of the depth information of the video signal. Fig. 5 is a graph showing an example of the relationship between the input and output of the dynamic range controller 12. The horizontal axis of Fig. 5 indicates an inputted depth information (inputted video depth), and the vertical axis thereof indicates an outputted depth information (outputted video depth).

Fig. 5 shows an example where the depth information is shown in a digital signal of eight bit. When the depth information of a pixel is the intermediate value of "127", the pixel is not displayed three-dimensionally, namely, the pixel is displayed so that the pixel is seen on the display 10. As the depth information is larger, the pixel is displayed so that the image is seen nearer-side from the display 10, while as the depth information is smaller, the pixel is displayed so that the image is seen farther-side from the display 10.

A line g1 in Fig. 5 is a setting example where the dynamic range controller 12 does not perform processing, and the inputted depth information is outputted as itself. A line g2 has a gradient smaller than the line g1 has. Therefore, the outputted depth information is closer to the intermediate value of "127" than the inputted depth information. This is another setting example where the image signal is displayed so that the image is seen as close to the display 10 as possible. Furthermore, a line g3 has a gradient smaller than the line g1 has, and the outputted depth information is smaller than the intermediate value of "127" even if the inputted depth information is the intermediate value of "127". Therefore, the outputted depth information is totally small. This is another setting example where the image signal is displayed so that the image is totally seen far-side from the display 10.

The lines g2 or g3 can be obtained by adjusting a gain (gradient) parameter or an offset parameter using the intermediate value of "127" as a center. In this case, the dynamic range controller 12 can be implemented by a multiplier and an adder simply.

Furthermore, the input-output relationship can be set as a curve g4. By this setting, even when the variation of the inputted depth information around the intermediate value of "127" is small, the depth of the seen image varies considerably. The arbitrary input-output relationship such as the curve g4 can be obtained by providing a LUT (Look Up Table) in the dynamic range controller 12, for example.

By such a manner, the dynamic range controller 12 can set various input-output relationships as shown in Fig. 5 by using dynamic range control values such as the gain parameter, the offset parameter and/or values written in the LUT, thereby adjusting the depth information. The depth information outputted from the dynamic range controller 12 is provided to the filter processing modules 151 to 159 in common.

Fig. 6 is a diagram describing a viewing distance setting parameter d1 and a depth setting parameter d2. The viewing distance setting module 13 of Fig. 4 sets the distance between a viewer 21 and the display 10 as the distance setting value d1. Furthermore, the depth setting module 14 sets a depth range of the video signal as the depth setting parameter d2. As shown in Fig. 6, the depth setting parameter d2 corresponds to a distance between a position 22 and a position 23. The position 22 is a position where the image is seen at the nearest-side from the display 10 to the user 21. The position 23 is a position where the image is seen at the farthest-side therefrom.

The viewing distance setting module 13 and the depth setting module 14 are implemented by registers, for example. The viewing distance setting parameter d1 and the depth setting parameter d2 are arbitrarily set and inputted to the filter processing modules 151 to 159.

The filter processing modules 151 to 159 generate first to ninth parallax images respectively based on the depth information outputted by the dynamic range controller 12, the viewing distance setting parameter d1 and the depth setting parameter d2.

More specifically, because an object having large depth information (for example, the object 50 in Fig. 2), namely, present at near-side is seen shifted to the right side comparing to background area 52 in a parallax image seen from a left direction, each of the filter processing modules 151 to 159 shifts such object to the right side to generate the parallax image seen from the left direction. On the other hand, each of the filter processing modules 151 to 159 shifts the object to the left side to generate a parallax image seen from a right direction.

The generated parallax images depend on the parallax image generating parameters such as the dynamic range control value, the viewing distance setting parameter d1 and the depth setting parameter d2. For example, when the depth information of the video signal outputted from the dynamic range controller 12 is larger (smaller) than the intermediate value of "127", the parallax image is generated so that the image is seen at near-side (far-side) from the display 10. Furthermore, as the depth information is closer to "0" or "255", as the viewing distance setting value d1 is smaller, or as the depth setting parameter d2 is larger, the shifting amount becomes larger. Note that, the filter processing modules 151 to 159 have shifting amounts different from each other, thereby generating the parallax images seen from different viewpoints.

By such a manner, the first to ninth parallax images are generated seen from nine viewpoints arranged in a horizontal direction from left to right.

Because the first multiple parallax image generator 7 of Fig. 4 has nine filter processing modules 151 to 159, the first multiple parallax image generator 7 can generate nine parallax images for autostereoscopic display. However, only two filter processing modules are provided, and it is possible to generate two parallax images for stereoscopic display with glasses. Furthermore, because the first multiple parallax image generator 7 of Fig. 4 can generate two parallax images for the stereoscopic display with glasses using two of the filter processing modules 151 to 159, it is also possible to selectively generate the parallax images for the autostereoscopic display and those for the stereoscopic display with glasses.

Hereinafter, an explanation will be described where two parallax images are generated for simplifying the explanation.

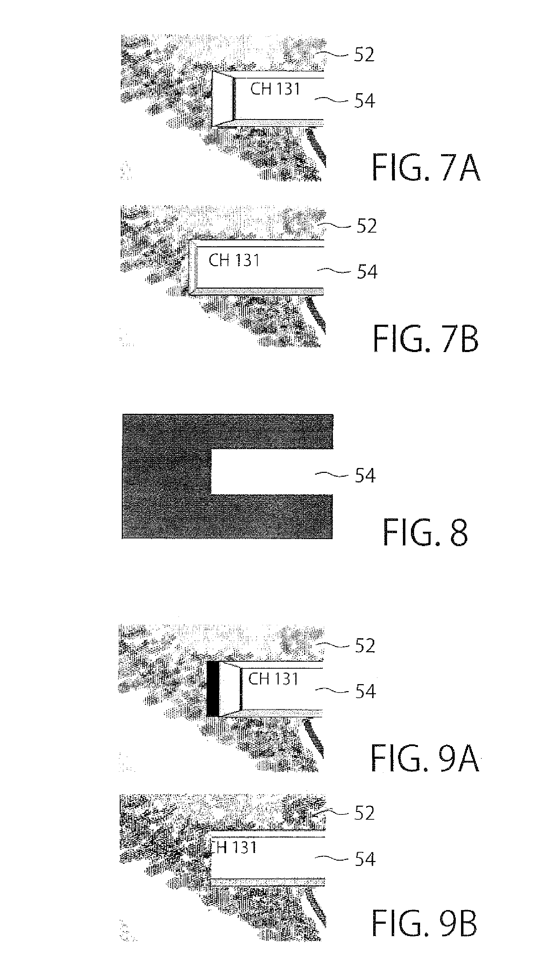

The second multiple parallax image generator 8 generates multiple parallax images based on the OSD information transmitted through the transmission system 40. The number of the viewpoints of the parallax images generated by the second multiple parallax image generator 8 is the same as that of parallax images generated by the first multiple parallax image generator 7. For example, it is assumed that the OSD is "CH 131" of Fig. 2 indicative of the channel number and that the first multiple parallax image generator 7 generates two parallax images. A parallax image for left eye (Fig. 7A) and that for right eye (Fig. 7B) are generated as the two parallax images from the original OSD image drawn or set by the OSD drawer 2 by using a shifting filter. Note that, each of Figs. 7A and 7B shows generated parallax image where a part of the image including the OSD is taken out. In the parallax image for left eye, a rectangle area indicative of the OSD 54 is shifted to the right, while in the parallax image for right eye, a rectangle area indicative of the OSD 54 is shifted to the left. In this time, the background is not shifted, which may cause distortion at the boundary between the OSD 54 and the background. Because of this distortion, an edge part of the rectangle area may be unsharp and disturbed. On the other hand, with regard to the depth information, the depth information of the object 50 of Fig. 2 is independent of that of OSD 54. However, since the second multiple parallax image generator 8 generates the parallax images by using the depth information of the OSD 54, the distortion does not occur in the background area 52.

In the present embodiment, in order to prevent the unsharp and disturbed image from being generated at the edge part of the area where the OSD is displayed due to the distortion, the multiple parallax images of the OSD generated by the second multiple parallax image generator 8 are superimposed on the multiple parallax images generated by the first multiple parallax image generator 7 using the blend information $\alpha$.

The superimposing module 9 performs this superimposing processing. The blend information $\alpha$ at the area showing the original OSD drawn or set by the OSD drawer 2 as shown in Fig. 8 is different from that at the area of the OSD in the parallax images as shown in Figs. 7A and 7B. Therefore, if the OSD 54 is superimposed on the background 52 simply, a black part may be generated because the background area 52 is replaced by a part where the OSD 54 does not exist as shown in Fig. 9A, or a part of OSD 54 may be lacked as shown in Fig. 9B.

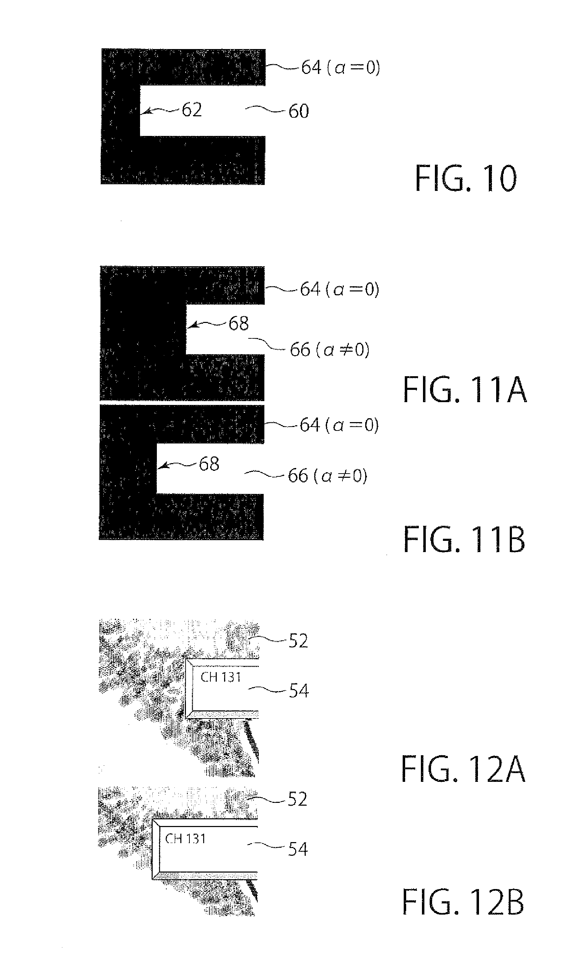

Therefore, in the present embodiment, an area 60 seen at nearer-side comparing to the background, namely, the area 60 having larger depth information is set at an area obtained by spreading the OSD image 54 to left and right directions (horizontal direction of the display) in the display as shown in Fig. 10. As a result, the area 60 is wider than the OSD image 54 of Figs. 7A and 7B. For example, the depth information whose area is spread to the left and the right directions can be realized by using a maximum value of data obtained by shifting the data (value) of the depth information to the left direction and data obtained by shifting the data (value) of the depth information to the right direction. Or, the data (value) of the depth information spread to the left and the right direction can be set in the OSD drawer 2 in advance. The data is set at generating the OSD data, for example. Because of this, a changing point 62 of the depth information value locates at a position where the blend information $\alpha$ is "0", namely, the image is transparent. Note that, in Fig. 10, an area 64 indicates an area where the blend information $\alpha$ is "0". Therefore, setting the area obtained by spreading the OSD image 54 to the left and the right directions in the display, as the area 60 means spreading the area where the blend information $\alpha$ of the OSD image is "0" to the left and the right directions, and further means that the blend information $\alpha$ of the OSD image is modified or changed based on the depth information of the OSD.

Accordingly, the multiple parallax images are generated by the second multiple parallax image generator 8 based on the depth information of the OSD, and with respect to each of the parallax images, the blend information $\alpha$ is modified or changed based on the depth information of the OSD to the OSD image area shifted to the left and the right direction based on the depth information. For example, Figs. 11A and 11B show the blend information $\alpha$ modified or changed based on the depth information of the OSD in a case where the second multiple parallax image generator 8 generates the parallax images for left eye and the right eye. Here, In Figs. 11A and 11B, the reference numeral 66 indicates an area where the blend information $\alpha$ is not "0", and the reference numeral 68 indicates a boundary between an area where the modified or changed blend information $\alpha$ is "0" and an area where the $\alpha$ is not "0".

Like this, in the present embodiment, a transparent part of the image, namely, the blend information $\alpha$ is "0" is deformed on generating the multiple parallax image. Therefore, the rectangle area indicative of the OSD image 54 is not deformed.

The superimposing module 9 superimposes the multiple parallax images of the OSD generated by the second multiple parallax image generator 8 on the multiple parallax images generated by the first multiple parallax image generator 7 using the blend information $\alpha$ modified or changed based on the depth information of the OSD by the second multiple parallax image generator 8 to generate a superimposed multiple parallax images based on the following equation.

$$C = A\left(\frac{M - \alpha}{M}\right) + B\frac{\alpha}{M}$$

Here, the "M" is a maximum value of the blend information $\alpha$ modified or changed based on the depth information of the OSD, the "A" is a pixel value of the multiple parallax images generated by the first multiple parallax image generator 7, the "B" is a pixel value of the multiple parallax images generated by the second multiple parallax image generator 8, the "C" is a pixel value of the multiple parallax images generated by the superimposing module 9. For example, when the blend information $\alpha$ is expressed by n bits, $M = 2^n - 1$.

The superimposing module 9 sorts the multiple parallax images obtained by such a manner for three-dimensional display and sends them to the display 10. Then, the display 10 displays them. The image for three-dimensional display can be obtained where the edges of the OSD image 54 are not lack and are clearly kept as the original image and undesired color is not added on the image. For example, Fig. 12A shows a parallax image for left eye and Fig. 12B shows a parallax image for left eye. As shown in Figs. 12A and 12B, natural and clear three-dimensional OSD is obtained.

Note that, although an example where the second multiple parallax image generator 8 generates two parallax images for stereoscopic display with glasses, nine parallax images are similarly generated for autostereoscopic display.

The internal configuration of the second multiple parallax image generator 8 is similar to that of the first multiple parallax image generator 7 of Fig. 4. However, the dynamic range controller 12, the viewing distance setting module 13 and the depth setting module 14 are provided in the second multiple parallax image generator 8 separated from those of the first multiple parallax image generator 7. Then, the parallax image generating parameters such as the input-output relationship of the dynamic range controller 12, the viewing distance setting parameter d1 and the depth setting parameter d2 for the first multiple parallax image generator 7 (for the image signal) can be set independent of those for the second multiple parallax image generator 8 (for the OSD).

When exact depth information is known, for example, when the image signal is generated by computer graphic, it is possible that the image signal may be three-dimensionally displayed dynamically and the OSD may be three-dimensionally displayed negatively. On the other hand, when the depth information of the image signal is not reliable, it is possible that the image signal may be three-dimensionally displayed negatively and the OSD may be three-dimensionally dynamically.

Furthermore, the parallax image generating parameters for the OSD are fixed (predetermined setting) at shipment, and those for the image signal can be varied by the user. In this case, if the user has the display 10 display the OSD for controlling the parallax image generating parameters for the image signal and varies it, the stereoscopic display of the OSD is not varied.

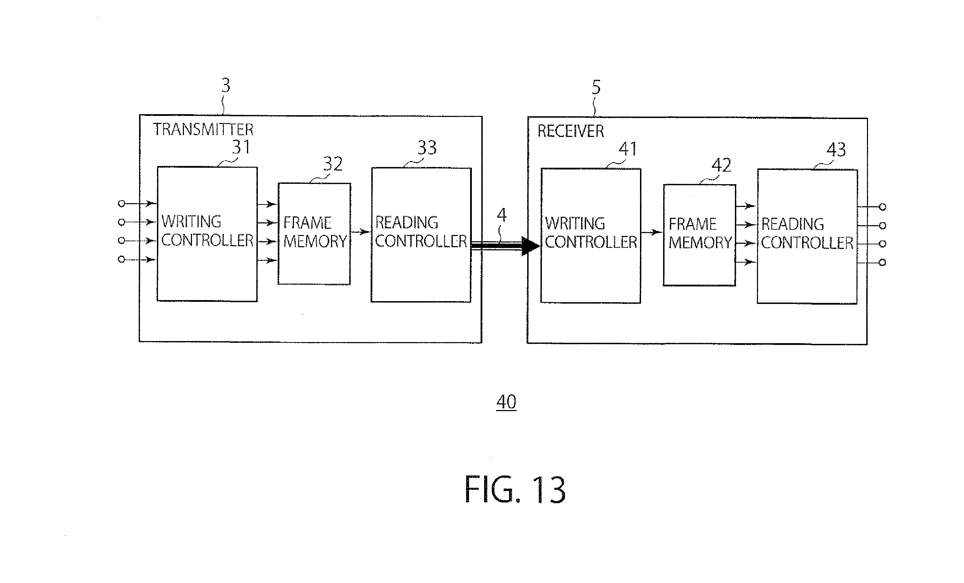

Then, examples of the transmission manner of the image information and the OSD information according to the present embodiment will be described with reference to Figs. 13 to 16.

Fig. 13 is a schematic block diagram showing an example of the transmission system 40 of Fig. 1 according to the present embodiment. The transmission system 40 according to the specific example has the transmitter 3, the transmission path 4 and the receiver 5. The transmitter 3 has a writing controller 31, a frame memory 32 and a reading controller 33. The receiver 5 has a writing controller 41, a frame memory 42 and a reading controller 43.

The writing controller 31 receives the image signal information sent from the image signal processing module 1 and the OSD information drawn or set by the OSD drawer 2 and writes them in a predetermined area of the frame memory 32 by a frame.

More specifically, because the image signal information sent from the image signal processing module 1 has the brightness values R, G and B, a frame composed of them is written in the predetermined area of the frame memory 32. Furthermore, when the image signal sent from the image signal processing module 1 has the depth information of each pixel, a frame with relation to the depth information is written in a predetermined area of the frame memory 32.

Furthermore, the OSD information sent from the OSD drawer 2 has the blend information $\alpha$ and the depth information in addition to the Luminance values R, G and B. Therefore, with regard to the OSD information, the Luminance values R, G and B, the blend information $\alpha$ and the depth information are written in a predetermined area of the frame memory 32. Note that, the blend information $\alpha$ of the OSD and the brightness values R, G and B may compose a frame, or the blend information $\alpha$ and the depth information may compose a frame.

The image signal written in the frame memory 32 is read out by the reading controller 33 sequentially by a frame and transmitted to the writing controller 41 of the receiver 5. The writing controller 41 writes the inputted image signal in a predetermined area of the frame memory 42 by a frame. The image signal written in the frame memory 42 is read out by the reading controller 43 sequentially by a frame and transmitted to the first multiple parallax image generator 7 or the second multiple parallax image generator 8.

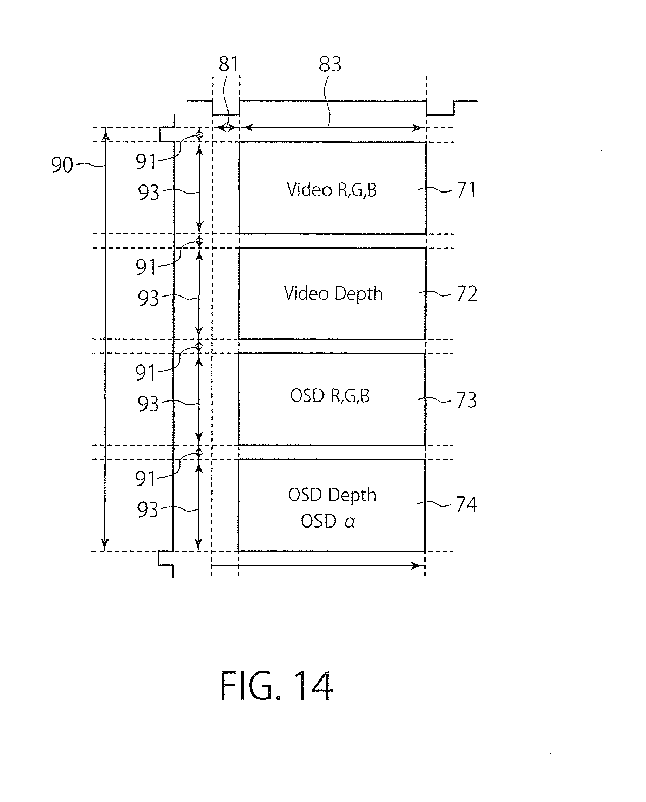

When an HDMI (High-Definition Multimedia Interface) standard is used as the transmission path 4 in the transmission system 40, three signal values, namely, R, G and B can be transmitted. Therefore, as shown in Fig. 14, when the image signal from the image signal processing module 1 has the depth information, the image signal is divided into frames 71 to 74. The frame 71 is composed of the brightness values R, G and B. The frame 72 is composed of the depth information of the image signal. The frame 73 is composed of the brightness values R, G and B of the OSD. The frame 74 is composed of the depth information and the blend information α of the OSD. The writing controller 31 divides the image signal into these frames 71 to 74, and these frames 71 to 74 are written in a predetermined area of the frame memory 32. By such a manner, the image signal information and the OSD information can be transmitted without increasing the number of frames. Note that, in Fig. 14, the reference numeral 81 indicates a horizontal blanking period, and the reference numeral 83 indicates a horizontal scanning period, the reference numeral 90 indicates a frame scanning period, the reference numeral 91 indicates a vertical blanking period, and the reference numeral 93 indicates a vertical scanning period.

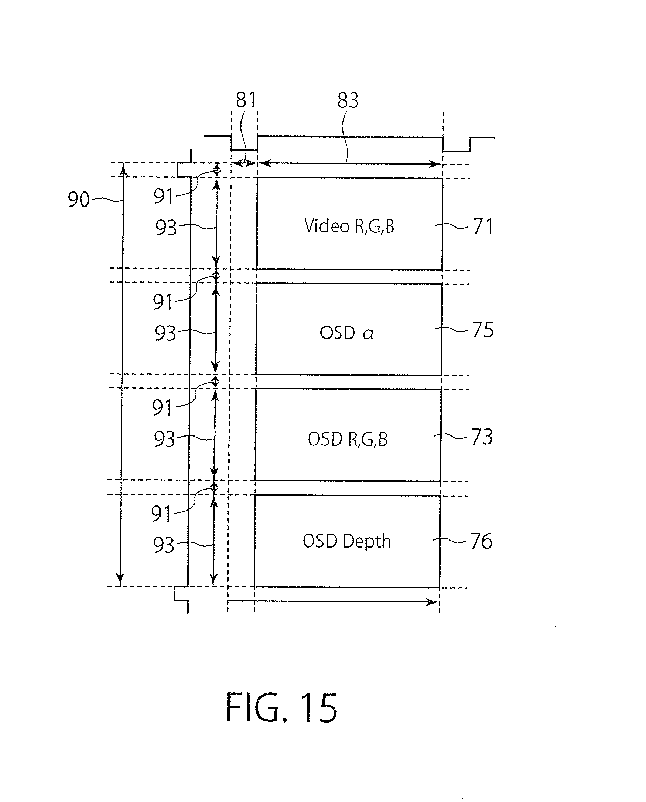

Note that, when the image signal sent from the image signal processing module 1 does not have the depth information, the image signal is divided into frames 71, 75, 73 and 76 as shown in Fig. 15. The frame 71 is composed of the brightness values R, G and B. The frame 75 is composed of the blend information α of the OSD. The frame 73 is composed of the brightness values R, G and B of the OSD. The frame 76 is composed of the depth information of the OSD. Also in this case, the image signal information and the OSD information can be transmitted without increasing the number of frames.

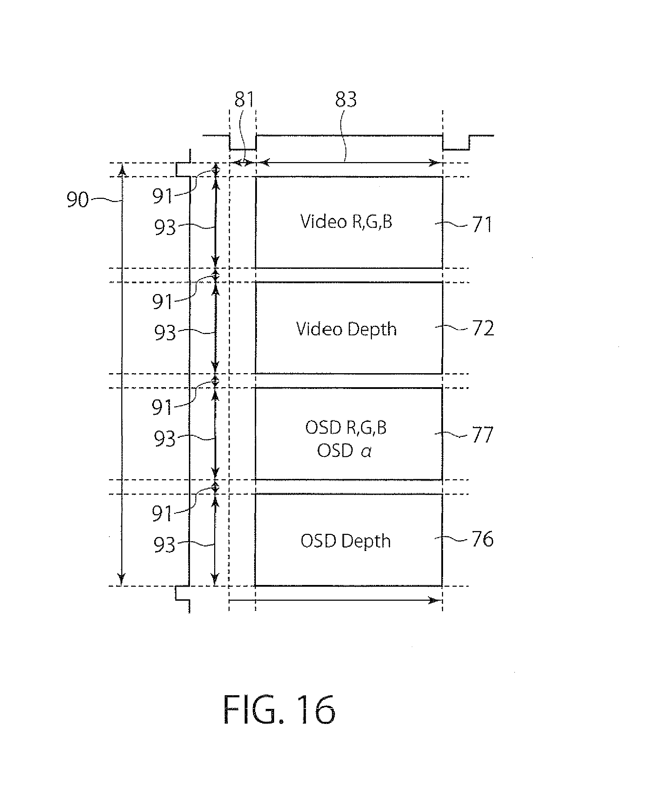

On the other hand, when an LVDS (Low Voltage Differential Signaling) standard is used as the transmission path 4 in the transmission system 40, data of "35" bits can be transmitted. Therefore, "32" bits, namely, the brightness values R, G and B and the blend information α of eight bits respectively can be transmitted. In this case, as shown in Fig. 16, the image signal is divided into frames 71, 72, 77 and 76. The frame 71 is composed of the brightness values R, G and B of the image signal sent from the image signal processing module 1. The frame 72 is composed of the depth information of the image signal. The frame 77 is composed of the brightness values R, G and B and the blend information α of the OSD. The frame 76 is composed of the depth information of the OSD. Also in this case, the image signal information and the OSD information can be transmitted without modifying the conventional transmission format.

As stated above, in the present embodiment, the parallax image generating parameters for the first multiple parallax image generator 7 and those for the second multiple parallax image generator 8 are set independently. Therefore, stereoscopic display of the image signal and that of the OSD can be controlled independently.

Note that, one or a plurality of parallax image generating parameters may be set to the filter processing module, and it is possible that one of the parallax image generating parameters shown in Fig. 4 may be set, or other parallax image generating parameter may be set. Some of the parallax image generating parameters may be common to the first multiple parallax image generator 7 and the second multiple parallax image generator 8 and it is enough that at least one of them is set independently.

At least a part of the image display device explained in the above embodiments can be formed of hardware or software. When the image display device is partially formed of the software, it is possible to store a program implementing at least a partial function of the image display device in a recording medium such as a flexible disc, CD-ROM, etc. and to execute the program by making a computer read the program. The recording medium is not limited to a removable medium such as a magnetic disk, optical disk, etc., and can be a fixed-type recording medium such as a hard disk device, memory, etc.

Further, a program realizing at least a partial function of the image display device can be distributed through a communication line (including radio communication) such as the Internet etc. Furthermore, the program which is encrypted, modulated, or compressed can be distributed through a wired line or a radio link such as the Internet etc. or through the recording medium storing the program.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fail within the scope and spirit of the inventions.

## Claims

1.  An image processing device comprising:

    a first multiple parallax image generator configured to generate a plurality of parallax images of an image signal seen from viewpoints different from each other based on one parallax image generating parameter or a plurality of parallax image generating parameters; and
    a second multiple parallax image generator configured to generate a plurality of parallax images of an OSD (On Screen Display) superimposed on the image signal seen from viewpoints different from each other based on the parallax image generating parameter or the plurality of parallax image generating parameters,

wherein the parallax image generating parameter or at least one of the plurality of parallax image generating parameters set to the first multiple parallax image generator is independent of the parallax image generating parameter or at least one of the plurality of parallax image generating parameters set to the second multiple parallax image generator.

2. The device of claim 1, wherein the parallax image generating parameter or the plurality of parallax image generating parameters set to the first multiple parallax image generator are capable of being adjusted by a user.

3. The device of claim 1 or 2, wherein the parallax image generating parameter or the plurality of parallax image generating parameters set to the second multiple parallax image generator are predetermined settings.

4. The device of one of claims to 3, wherein the plurality of parallax image generating parameters comprises at least one of:

a dynamic range control parameter configured to control a dynamic range of depth information of the image signal or the OSD;
a viewing distance setting parameter indicative of a distance between a user and a display on which the image signal and the OSD are displayed; and
a depth setting parameter indicative of a distance between a first position and a second position, the first position being a position where the image signal and the OSD is seen at a nearest-side from the display to the user, the second position being a position where the image signal and the OSD is seen at a farthest-side from the display to the user.

5. The device of one of claims 1 to 4, wherein each of the first and the second multiple parallax image generators comprises a plurality of parallax image generating filter processing modules provided with the image signal or the OSD signal, the parallax image generating filter processing modules being configured to generate a parallax image seen from a predetermined viewpoint, wherein each of the parallax image generating filter processing modules is set with the parallax image generating parameter or the plurality of parallax image generating parameters in common.

6. An image processing method comprising:

generating a plurality of parallax images of an image signal seen from viewpoints different from each other based on one parallax image generating parameter or a plurality of parallax image generating parameters; and
generating a plurality of parallax images of an OSD (On Screen Display) superimposed on the image signal seen from viewpoints different from each other based on the parallax image generating parameter or the plurality of parallax image generating parameters,
wherein the parallax image generating parameter or at least one of the plurality of parallax image generating parameters for generating the parallax images of the image signal is independent of the parallax image generating parameter or at least one of the plurality of parallax image generating parameters for generating the parallax images of the OSD.

7. The method of claim 6, wherein the parallax image generating parameter or the plurality of parallax image generating parameters for generating the parallax images of the image signal are capable of being adjusted by a user.

8. The method of claim 6 or 7, wherein the parallax image generating parameter or the plurality of parallax image generating parameters for generating the parallax images of the OSD are predetermined settings.

FIG. 1

EP 2 466 900 A2

FIG. 2

FIG. 3

159
FILTER PROCESSING MODULE FOR
NINTH PARALLAX · · —o NINTH
PARALLAX IMAGE

152
FILTER PROCESSING MODULE FOR
SECOND PARALLAX

151
11a
Video
R,G,B o— FILTER PROCESSING MODULE FOR
FIRST PARALLAX

—o SECOND
PARALLAX IMAGE

—o FIRST
PARALLAX IMAGE

Video
Depth

d1

d2

11b
Video
Depth o—

DYNAMIC
RANGE
CONTROLLER

VIEWING
DISTANCE
SETTING
MODULE

DEPTH
SETTING
MODULE

12

13

14

7

FIG. 4

OUTPUT Video Depth

255

127

g4
g1
g2
g3

127    255    INPUT Video Depth

## FIG. 5

DEPTH SETTING
PARAMETER d2

FAR-SIDE POSITION 23

10

VIEWING DISTANCE
SETTING PARAMETER d1

NEAR-SIDE POSITION 22

VIEWER 21

## FIG. 6

CH 131

52

54

FIG. 7A

CH 131

52

54

FIG. 7B

54

FIG. 8

CH 131

52

54

FIG. 9A

H 131

52

54

FIG. 9B

EP 2 466 900 A2

FIG. 10

FIG. 11A

FIG. 11B

FIG. 12A

FIG. 12B

14

FIG. 13

81   83

90
91
93

Video R,G,B   71

91
93

Video Depth   72

91
93

OSD R,G,B   73

91

OSD Depth
OSD α   74
93

FIG. 14

FIG. 15

FIG. 16